(19) Europäisches Patentamt
European Patent Office
Office européen des brevets

(11) EP 4 759 853 A1

(12) **EUROPÄISCHE PATENTANMELDUNG**

(43) Veröffentlichungstag:
**17.06.2026 Patentblatt 2026/25**

(21) Anmeldenummer: 24220056.6

(22) Anmeldetag: **16.12.2024**

(51) Internationale Patentklassifikation (IPC):
*C08G 18/22* (2006.01)   *C08G 18/32* (2006.01)
*C08G 18/67* (2006.01)   *C08G 18/73* (2006.01)
*C08G 18/78* (2006.01)

(52) Gemeinsame Patentklassifikation (CPC):
**C08G 18/222; C08G 18/3206; C08G 18/67;
C08G 18/73; C08G 18/7837**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Covestro Deutschland AG
51373 Leverkusen (DE)**

(72) Erfinder:
• **Ludewig, Michael
 51519 Odenthal (DE)**
• **Mager, Dieter
 51373 Leverkusen (DE)**
• **Hebestreit, Tanja
 51688 Wipperfürth (DE)**

(74) Vertreter: **Levpat
c/o Covestro AG
Gebäude K12
51365 Leverkusen (DE)**

(54) **HOCHFUNKTIONELLE, MIT ALLOPHANATGRUPPEN UND GEGEBENENFALLS ISOCYANURATGRUPPEN MODIFIZIERTE POLYISOCYANATE UND DEREN HERSTELLUNG**

(57)  Die Erfindung betrifft ein mit Allophanatgruppen und gegebenenfalls Isocyanuratgruppen modifiziertes Polyisocyanat mit einem Anteil an Allophanatgruppen $\geq$ 50 mol% bis $\leq$ 100 mol%, bevorzugt $\geq$ 50 mol % bis $\leq$ 99 mol%, bevorzugt $\geq$ 60 mol % bis $\leq$ 98 mol%, besonders bevorzugt $\geq$ 70 mol % bis $\leq$ 98 mol%, jeweils bezogen auf die Gesamtmenge an Allophanatgruppen und Isocyanuratgruppen im modifizierten Polyisocyanat und bestimmt durch NMR spektroskopische Analyse, welches erhältlich ist aus der Reaktion einer Zusammensetzung enthaltend oder bestehend aus A) einer Mischung aus A 1) 1, 1, 1-Trimethylolpropan und A2) 1,3-Butandiol und/oder 1,4-Butandiol und B) mindestens einem monomeren Diisocyanat, welches aliphatisch und/oder cycloaliphatisch, gebundene Isocyanatgruppen aufweist. Ebenso betrifft die Erfindung das Verfahren zur Herstellung dieser modifizierten Polyisocyanate.

**Beschreibung**

Die Erfindung betrifft ein mit Allophanatgruppen und gegebenenfalls Isocyanuratgruppen modifiziertes Polyisocyanat mit einem Anteil an Allophanatgruppen $\geq$ 50 mol% bis $\leq$ 100 mol%, bevorzugt $\geq$ 50 mol % bis $\leq$ 99 mol%, bevorzugt $\geq$ 60 mol % bis $\leq$ 98 mol%, besonders bevorzugt $\geq$ 70 mol % bis $\leq$ 98 mol%, jeweils bezogen auf die Gesamtmenge an Allophanatgruppen und Isocyanuratgruppen im modifizierten Polyisocyanat und bestimmt durch NMR spektroskopische Analyse, welches erhältlich ist aus der Reaktion einer Zusammensetzung enthaltend oder bestehend aus A) einer Mischung aus A1) 1,1,1-Trimethylolpropan und A2) 1,3- Butandiol und/oder 1,4-Butandiol und B) mindestens einem monomeren Diisocyanat, welches aliphatisch und/oder cycloaliphatisch, gebundene Isocyanatgruppen aufweist. Ebenso betrifft die Erfindung das Verfahren zur Herstellung dieser modifizierten Polyisocyanate.

Monomere Diisocyanate werden als Vernetzer in Polyurethan-Systemen aufgrund ihrer Flüchtigkeit und ihrer toxikologischen Eigenschaften praktisch nicht eingesetzt. Man bedient sich in der Regel der höhermolekularen, beispielsweise mit Uretdion-, Isocyanurat-, Iminooxadiazindion-, Urethan- oder Allophanatgruppen modifizierten Derivate. Eine Übersicht zu diesen Polyisocyanaten und ihrer Herstellungsweise ist exemplarisch in Laas et al., J. Prakt. Chem. 336, 1994, 185-200, gegeben.

Die Modifizierung monomerer Diisocyanate mit Allophanatgruppen erfolgt durch Addition an Isocyanatreaktive Spezies. WO 2019/062383 A1 und EP 4 303 246 A1 beschreiben die Synthese hochfunktioneller Allophanat-modifizierter Polyisocyanate, unter anderem auf Basis von 1,1,1-Trimethylolpropan (TMP) und Hexamethylendiisocyanat (HDI). Problematisch bei dieser Synthese ist die schlechte Mischbarkeit des Isocyanats mit dem bei Raumtemperatur festen TMP. Die Mischung lässt sich selbst mit geschmolzenen TMP nicht vollständig homogenisieren. Es kann zur Gelteilchenbildung und somit zur Bildung von inhomogenen Produkten kommen. Eine Aufgabe der vorliegenden Erfindung war es dieses Problem zu lösen.

Allophanat-modifizierte Polyisocyanate auf Basis von TMP sind hochfunktionell, weisen gleichzeitig aber auch eine hohe Viskosität auf. Ersteres führt in der Anwendung zu Produkten mit hoher Härte und chemischer Beständigkeit. Die hohe Viskosität jedoch erschwert die Handhabung der Polyisocyanate. Eine weitere Aufgabe der vorliegenden Erfindung bestand daher in der Bereitstellung von entsprechenden hochfunktionellen, gleichzeitig aber niedrigviskosen Allophanat-modifizierten Polyisocyanaten.

Die vorgenannten Probleme konnten gelöst werden durch die Verwendung einer Mischung von 1,1,1-Trimethylolpropan mit 1,3- Butandiol und/oder 1,4-Butandiol bei der Synthese der Allophanat-modifizierten Polyisocyanate.

Gegenstand der vorliegenden Erfindung ist ein mit Allophanatgruppen und gegebenenfalls Isocyanuratgruppen modifiziertes Polyisocyanat

mit einem Anteil an Allophanatgruppen $\geq$ 50 mol% bis $\leq$ 100 mol%, bevorzugt $\geq$ 50 mol % bis $\leq$ 99 mol%, bevorzugt $\geq$ 60 mol % bis $\leq$ 98 mol%, besonders bevorzugt $\geq$ 70 mol % bis $\leq$ 98 mol%, jeweils bezogen auf die Gesamtmenge an Allophanatgruppen und Isocyanuratgruppen im modifizierten Polyisocyanat und bestimmt durch NMR spektroskopische Analyse,

welches erhältlich ist aus der Reaktion einer Zusammensetzung enthaltend oder bestehend aus

A) einer Mischung aus A1) 1,1,1-Trimethylolpropan und A2) 1,3- Butandiol und/oder 1,4-Butandiol, und
B) mindestens einem monomeren Diisocyanat, welches aliphatisch und/oder cycloaliphatisch, gebundene Isocyanatgruppen aufweist.

Ein weiterer Gegenstand ist ein Verfahren zur Herstellung von mit Allophanatgruppen und gegebenenfalls Isocyanuratgruppen modifizierten Polyisocyanaten gemäß vorstehender Beschreibung, wobei eine Zusammensetzung der oben genannten Art zur Reaktion gebracht wird.

<u>Mischung A):</u>

Erfindungsgemäß wird eine Mischung aus A1) 1,1,1-Trimethylolpropan und A2) 1,3- Butandiol und/oder 1,4-Butandiol verwendet.

In einer bevorzugten Ausführungsform beträgt das Gewichtverhältnis von A1 zu A2 von 1 : 10 bis 10 : 1, bevorzugt von 1 : 5 bis 5 : 1, besonders bevorzugt von 1 : 2 bis 2 : 1.

Es ist auch möglich neben der Mischung A) weitere Alkohole, d.h. Mono- und/oder Polyole mit einer Funktionalität $\geq$ 2 A') zu verwenden, wobei deren Anteil in Summe maximal 20 Gewichtsprozent ($\geq$ 0 bis $\leq$ 20 Gewichtsprozent), bevorzugt maximal 10 Gewichtsprozent ($\geq$ 0 bis $\leq$ 10 Gewichtsprozent), jeweils bezogen auf das Gewicht der Mischung A) beträgt.

Als Beispiele solcher Alkohole A') seien genannt ein- oder mehrwertige Alkohole mit bis zu 15 Kohlenstoffatomen, vorzugsweise 2 bis 6 Kohlenstoffatomen, wie z.B. Methanol, Ethanol, n-Propanol, Isopropanol, n-Butanol, n-Hexanol, 2-Ethyl-1-hexanol, Ethylenglykol, Propylenglykol, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylen-glykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethylallylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon, Tetrahydrofurfurylalkohol, die isomeren Pentandiole, Hexandiole, Heptandiole und Octandiole, 1,10-Decandiol, 1,2- und 1,4-Cyclohexandiol, 1,4-Cyclohexandimethanol, 4,4'-(1-Methylethyliden)-biscyclohexanol, 1,1,1-Trimethylolethan, 1,2,6-Hexantriol, 2,2-Bis(hydroxymethyl)-1,3-propandiol, Bis-(2-hydroxyethyl)-hydrochinon, 1,2,4- und 1,3,5-Trihydroxycyclohexan oder 1,3,5-Tris(2-hydroxyethyl)-isocyanurat aber auch um einfache Esteralkohole, wie z.B. Hydroxypivalinsäureneopentylglykolester.

Geeignete hydroxyfunktionelle Verbindungen sind auch die an sich bekannten höhermolekularen Polyhydroxylverbindungen vom Polyester-, Polycarbonat-, Polyestercarbonat- oder Polyethertyp, insbesondere solche des Molekulargewichtsbereiches 200 bis 2000 g/mol.

Als hydroxyfunktionelle Verbindungen geeignete Polyesterpolyole sind beispielsweise solche eines mittleren, aus Funktionalität und Hydroxylzahl berechenbaren Molekulargewichtes von 200 bis 4000 g/mol, vorzugsweise von 250 bis 2500 g/mol, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen, beispielsweise den obengenannten mit 2 bis 14 Kohlenstoffatomen, mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Die zur Herstellung der Polyesterpolyole verwendeten Säuren oder Säurederivate können aliphatischer, cycloaliphatischer und/oder aromatischer Natur sein und gegebenenfalls, z.B. durch Halogenatome, substituiert und/oder ungesättigt sein. Beispiele geeigneter Säuren sind beispielsweise mehrwertige Carbonsäuren des Molekulargewichtsbereichs 118 bis 300 g/mol oder deren Derivate wie beispielsweise Bernsteinsäure, Adipinsäure, Sebacinsäure, Phthalsäure, Isophthalsäure, Trimellithsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole können auch beliebige Gemische dieser beispielhaft genannten Ausgangsverbindungen eingesetzt werden.

Eine als hydroxyfunktionelle Verbindung alternativ einzusetzende Art von Polyesterpolyolen sind solche, wie sie sich in an sich bekannter Weise aus Lactonen und einfachen mehrwertigen Alkoholen, wie z.B. den oben beispielhaft genannten, als Startermolekülen unter Ringöffnung herstellen lassen. Geeignete Lactone zur Herstellung dieser Polyesterpolyole sind beispielsweise $\beta$-Propiolacton, $\gamma$-Butyrolacton, $\gamma$- und $\delta$-Valerolacton, $\varepsilon$-Caprolacton, 3,5,5- und 3,3,5-Trimethylcaprolacton oder beliebige Gemische solcher Lactone.

Als hydroxyfunktionelle Verbindungen geeignete Polyhydroxylverbindungen vom Polycarbonattyp stellen insbesondere die an sich bekannten Polycarbonatdiole dar, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 g/mol beispielhaft genannt sind, mit Diarylcarbonaten, wie z.B. Diphenylcarbonat, Dialkylcarbonaten, wie z.B. Dimethylcarbonat, oder Phosgen herstellen lassen.

Als hydroxyfunktionelle Verbindungen geeignete Polyhydroxylverbindungen vom Polyestercarbonattyp sind insbesondere die an sich bekannten Estergruppen- und Carbonatgruppen aufweisende Diole, wie sie beispielsweise gemäß der Lehre der DE-A 1 770 245 oder WO 03/002630 durch Umsetzung zweiwertiger Alkohole mit Lactonen der oben beispielhaft genannten Art, insbesondere $\varepsilon$-Caprolacton und anschließende Reaktion der dabei entstehenden Polyesterdiole mit Diphenylcarbonat oder Dimethylcarbonat erhalten werden können.

Als hydroxyfunktionelle Verbindungen geeignete Polyetherpolyole sind insbesondere solche eines mittleren, aus Funktionalität und Hydroxylzahl berechenbaren Molekulargewichtes von 200 bis 2000 g/mol, vorzugsweise 250 bis 1000 g/mol, mit einem Hydroxylgruppen-Gehalt von 1,6 bis 25 Gew.-%, vorzugsweise 3,6 bis 20 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, wie die oben beschriebenen einfachen mehrwertigen Alkohole mit 2 bis 14 Kohlenstoffatomen, als Startermoleküle eingesetzt werden. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyetherpolyole sind auch die an sich bekannten Polyoxytetramethylenglykole, wie sie beispielsweise gemäß H. Meerwein et al., Angew. Chem. 72, 1960, 927 - 934 durch Polymerisation von Tetrahydrofuran erhalten werden können.

Die Verwendung solcher höhermolekularen Polyole ist aber nicht bevorzugt.

Es können auch Mischungen der oben genannten Alkohole A') verwendet werden.

Diisocyanate B):

Vorliegend ist der Begriff "aliphatisch" definiert als nicht-aromatische Kohlenwasserstoffgruppen, die gesättigt oder ungesättigt sind.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind.

Erfindungsgemäß werden monomere Diisocyanate, welche aliphatisch und/ oder cycloaliphatisch, gebundenen Isocyanatgruppen aufweisen, verwendet.

Geeignete monomere Diisocyanate können nach beliebigen Verfahren, z.B. durch Phosgenierung oder auf phosgenfreiem Weg, beispielsweise durch Urethanspaltung, hergestellt werden.

Geeignete monomere Diisocyanate, im Folgenden auch Ausgangsdiisocyanate genannt, sind beispielsweise solche des Molekulargewichtsbereiches 154 bis 400 g/mol, wie z.B. 1,6-Diisocyanatohexan (HDI), 1,5-Diisocyanatopentan (PDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan ($H_{12}$-MDI), 1,3-und l,4-Bis(isocyanatomethyl) cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetramethyl-1,1'-bi(cyclohexyl), 1,8-Diisocyanato-p-menthan, 1,3-Diisocyanatoadamantan, 1,3-Dimethyl-5,7-diisocyanatoadamantan, sowie beliebige Gemische solcher Diisocyanate. Weitere ebenfalls geeignete Diisocyanate finden sich darüber hinaus beispielsweise in Justus Liebigs Annalen der Chemie, 562, 1949, 75-136.

Als Ausgangsdiisocyanate besonders bevorzugt sind aliphatische Diisocyanate der genannten Art, 1-Isocyanato-3,3,5-trimethyl-5-isocyanatomethylcyclohexan, 2,4'- und 4,4'-Diisocyanatodicyclohexylmethan, sowie beliebige Gemische dieser Diisocyanate. Insbesondere geeignet sind 1,5-Diisocyanatopentan (PDI) und 1,6-Diisocyanatohexan (HDI) und deren Gemische.

Für den Fall, dass Mischungen verschiedener Ausgangsdiisocyanate zum Einsatz kommen, ist es ganz besonders bevorzugt, dass $\leq$ 30 Gew.-%, bevorzugt $\leq$ 10 Gew.-% und besonders bevorzugt $\geq$ 0 bis $\leq$ 5 Gew.-% der insgesamt eingesetzten Ausgangsdiisocyanate cycloaliphatische Diisocyanate sind und der Rest aliphatische Diisocyanate sind.

Verfahren

Zur Herstellung der erfindungsgemäßen, mit Allophanatgruppen und gegebenenfalls Isocyanuratgruppen modifizierten Polyisocyanate, wird eine Zusammensetzung enthaltend oder bestehend aus Komponente A) und B) zur Reaktion gebracht.

Dabei werden die Ausgangsdiisocyanate der Komponente B) und hydroxyfunktionellen Verbindungen der Komponenten A) und sofern vorhanden A'), vorzugsweise in einem Äquivalentverhältnis von Isocyanatgruppen zu Hydroxylgruppen von 4 : 1 bis 200 : 1, vorzugsweise von 5 : 1 bis 50 : 1 und besonders bevorzugt 7 : 1 bis 30 : 1, umgesetzt.

Die Allophanatisierung ist ein zweistufiges Verfahren, bei dem zunächst eine Hydroxyfunktion mit einer Isocyanatgruppe zu einem Urethan reagiert. Dieses wird anschließend mit einer weiteren Isocyanatgruppe zu einem Allophanat umgesetzt. Diese beiden Prozesse können sowohl gleichzeitig als auch nacheinander durchgeführt werden. Dabei ist ein sequenzielles Vorgehen bevorzugt, um die entstehende Exothermie besser kontrollieren zu können.

Die Urethanisierung wird bevorzugt thermisch und ohne Katalysator durchgeführt, kann aber gleichwohl auch katalysiert bei geringerer Temperatur erfolgen. Dazu kommen die dem Fachmann bekannten Urethanisierungskatalysatoren in Frage, wie. z.B. Organozinnverbindungen oder aminische Katalysatoren. Als Organozinnverbindungen seien beispielhaft genannt: Dibutylzinndiacetat, Dibutylzinndilaurat, Dibutylzinnbis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo[2.2.2]octan verwendet werden. Weitere Beispiele für erfindungsgemäß einsetzbare Urethanisierungskatalysatoren sind anorganische Zinnverbindungen wie z.B. SnCl2 oder zinnfreie Verbindungen, wie z.B. Salze des Bismuths, zB. Bismuthoctoat oder anderer Metalle wie z.B. Zinkverbindungen, Titanverbindungen oder Zirkoniumverbindungen. Es kann auch schon der in der anschließenden Allophanatisierungsreaktion verwendete Katalysator eingesetzt werden. Dies würde dann bei geringerer Temperatur und/oder geringerer Konzentration an Katalysator erfolgen, so dass in diesem Schritt noch keine oder nur wenig Allophanatisierungsreaktion auftritt.

Es ist auf diese Weise ebenfalls möglich, schon die vollständige Menge an Allophanatisierungskatalystor bei erhöhter Temperatur einzusetzen und die zweistufige Verfahrensweise zu einer einstufigen Umsetzung zu vereinfachen. Dies ist aber nicht bevorzugt, so dass der Allophanatisierungskatalysator erst dann zugesetzt wird, wenn die Urethangruppen ganz oder anteilig zu Allophanatgruppen umgesetzt werden sollen. Die anschließende Umsetzung zum Allophanat kann unkatalysiert als thermisch induzierte Allophanatisierung durchgeführt werden. Bevorzugt kommen zur Reaktionsbeschleunigung aber geeignete Katalysatoren zum Einsatz. Es können Katalysatoren eingesetzt werden, die die Bildung von Allophanatgruppen oder aber von Allophanat- und gleichzeitig auch von Isocyanuratgruppen beschleunigen.

Geeignete Katalysatoren sind beispielsweise einfache tertiäre Amine, wie beispielsweise Triethylamin, Tributylamin, N,N-Dimethylanilin, N-Ethylpiperidin, N,N'-Dimethylpiperazin, oder tertiäre Phosphine, wie beispielsweise Triethylphosphin, Tributylphosphin oder Dimethylphenylphosphin.

Weitere geeignete Katalysatoren sind die in GB 2 221 465 beschriebenen tertiären Hydroxyalkylamine, wie beispielsweise Triethanolamin, N-Methyldiethanolamin, Dimethylethanolamin, N-Isopropyldiethanolamin und 1-(2-Hydroxyethyl)-pyrrolidin oder die aus GB 2 222 161 bekannten Katalysatorsysteme, die aus Mischungen von tertiären bicyclischen Aminen, wie beispielsweise DBU, mit einfachen aliphatischen Alkoholen mit niedrigem Molekulargewicht bestehen.

Ebenfalls als Katalysatoren geeignet sind eine Vielzahl unterschiedlicher Metallverbindungen.

Geeignet sind beispielsweise die in der DE-A 3 240 613 als Katalysatoren beschriebenen Octoate und Naphthenate von Mangan, Eisen, Kobalt, Nickel, Kupfer, Zink, Zirkonium, Cer oder Blei oder deren Mischungen mit Acetaten von Lithium, Natrium, Kalium, Calcium oder Barium; die aus DE-A 3 219 608 bekannten Natrium- und Kaliumsalze von linearen oder verzweigten Alkancarbonsäuren mit bis zu 10 Kohlenstoffatomen, wie diejenigen der Propionsäure, Buttersäure, Valeriansäure, Capronsäure, Heptansäure, Caprylsäure, Pelargonsäure, Caprinsäure und Undecylensäure; die aus EP-A 0 100 129 bekannten Alkali- oder Erdalkalimetallsalze von aliphatischen, cycloaliphatischen oder aromatischen Mono- und Polycarbonsäuren mit 2 bis 20 Kohlenstoffen, wie beispielsweise Natriumbenzoat oder Kaliumbenzoat; die aus GB 1 391 066 A und GB 1 386 399 A bekannten Alkalimetallphenoxide, wie beispielsweise Natriumphenoxid oder Kaliumphenoxid; die aus GB 809 809 bekannten Alkali- und Erdalkalimetalloxide, -hydroxide, -carbonate, - alkoxide und -phenoxide, Alkalimetallsalze enolisierbarer Verbindungen, sowie Metallsalze schwacher aliphatischer und/oder cycloaliphatischer Carbonsäuren, wie beispielsweise Natriummethanolat, Natriumacetat, Kaliumacetat, Natriumacetoacetat, Blei-2-ethylhexanoat und Bleinaphthenat; die aus der EP-A 0 056 158 und der EP-A 0 056 159 bekannten, mit Kronenethern oder Polyetheralkoholen komplexierten basischen Alkalimetallverbindungen, wie beispielsweise komplexierte Natrium- oder Kaliumcarboxylate; das aus der EP-A 0 033 581 bekannte Pyrrolidinon-Kaliumsalz; die aus EP-A 2 883 895 bekannten monocyclischen oder polycyclischen Komplexverbindungen des Titans, Zirkoniums und/oder Hafniums, wie beispielsweise Zirkoniumtetra-n-butylat, Zirkoniumtetra-2-ethylhexanoat und Zirkoniumtetra-2-ethylhexylat; sowie Zinnverbindungen der im European Polymer Journal, 16, 1979, 147-148 beschriebenen Art, wie beispielsweise Dibutylzinndichlorid, Diphenylzinndichlorid, Triphenylstannanol, Tributylzinnacetat, Tributylzinnoxid, Zinnoctoat, Dibutyl(dimethoxy)stannan und Tributylzinnimidazolat.

Weitere geeignete Katalysatoren sind beispielsweise die aus DE-A 1 667 309, EP-A 0 013 880 und EP-A 0 047 452 bekannten quartären Ammoniumhydroxide, wie beispielsweise Tetraethylammoniumhydroxid, Trimethylbenzylammoniumhydroxid, N-(2-Hydroxyethyl)-N,N-Dimethyl-N-(2,2'-dihydroxymethylbutyl)-ammoniumhydroxid und 1-(2-Hydroxyethyl)-1,4-diazabicyclo[2.2.2]octanhydroxid (Monoaddukt von Ethylenoxid und Wasser an 1,4-Diazabicyclo[2.2.2]octan); die aus EP-A 37 65 oder EP-A 10 589 bekannten quartären Hydroxyalkylammoniumhydroxide, wie beispielsweise N, N, N-Trimethyl-N-(2-hydroxyethyl)-ammoniumhydroxid, die aus DE-A 2631733, EP-A 0 671 426, EP-A 1 599 526 und US 4,789,705 bekannten Trialkylhydroxyalkylammoniumcaboxylate, wie beispielsweise N, N, N-Trimethyl-N-2-hydroxypropyl-ammonium p-tert-butylbenzoat und N, N, N-Trimethyl-N-2-hydroxypropylammonium 2-ethylhexanoat; die aus EP-A 1 229 016 bekannten quartären Benzylammoniumcarboxylate, wie beispielsweise N-Benzyl-N,N-dimethyl-N-ethylammoniumpivalat, N-Benzyl-N,N-dimethyl-N-ethylammonium-2-ethylhexanoat, N-Benzyl-N,N,N-tributylammonium-2-ethylhexanoat, N,N-Dimethyl-N-ethyl-N-(4-methoxybenzyl)-ammonium-2-ethylhexanoat oder N,N,N-Tributyl-N-(4-methoxybenzyl)-ammoniumpivalat; die aus WO 2005/087828 bekannten tetrasubstituierten Ammonium-$\alpha$-hydroxycarboxylate, wie beispielsweise Tetramethylammoniumlactat; die aus EP-A 0 339 396, EP-A 0 379 914 und EP-A 0 443 167 bekannten quartären Ammonium- bzw. Phosphoniumfluoride, wie beispielsweise N-Methyl-N,N,N-trialkylammoniumfluoride mit $C_8$-$C_{10}$-Alkylresten, N,N,N,N-Tetra-n-butylammoniumfluorid, N,N,N-Trimethyl-N-benzylammoniumfluorid, Tetramethylphosphoniumfluorid, Tetraethylphosphoniumfluorid oder Tetra-n-butylphosphoniumfluorid; die aus EP-A 0 798 299, EP-A 0 896 009 und EP-A 0 962 455 bekannten quartären Ammonium- und Phosphoniumpolyfluoride, wie beispielsweise Benzyltrimethylammoniumhydrogenpolyfluorid; die aus EP-A 0 668 271 bekannten Tetraalkylammoniumalkylcarbonate, die durch Reaktion von tertiären Aminen mit Dialkylcarbonaten erhältlich sind; oder quartäre Ammonioalkylcarbonate mit Betainstruktur; die aus WO 1999/023128 bekannten quartären Ammoniumhydrogencarbonate, wie beispielsweise Cholinbicarbonat; die aus EP 0 102 482 bekannten, aus tertiären Aminen und alkylierenden Estern von Phosphorsäuren erhältlichen quartären Ammoniumsalze, wie beispielsweise Reaktionsprodukte von Triethylamin, DABCO oder N-Methylmorpholin mit Dimethylmethanphosphonat; oder die aus WO 2013/167404 bekannten tetrasubstituierten Ammoniumsalze von Lactamen, wie beispielsweise Trioctylammoniumcaprolactamat oder Dodecyltrimethylammoniumcaprolactamat.

Diese Katalysatoren können sowohl einzeln als auch in Form beliebiger Mischungen untereinander eingesetzt werden.

Die Katalysatoren werden im Allgemeinen in einer Menge von 0,0005 bis 5,0 Gew.-%, vorzugsweise von 0,0010 bis 1,0 Gew.-% und besonders bevorzugt von 0,0015 bis 0,1 Gew.-%, jeweils bezogen auf die Menge der eingesetzten Ausgangsdiisocyanate B), eingesetzt.

Die Katalysatoren werden entweder als solche oder gelöst in einem geeigneten organischen Lösungsmittel zugegeben. Bevorzugte Katalysator-Lösungsmittel sind solche, die gegenüber Isocyanaten reaktive Gruppen aufweisen und entsprechend in das Polymer eingebaut werden können. Dies sind beispielsweise ein- oder mehrwertige Alkohole wie Methanol, Ethanol, n-Propanol, Isopropanol, n-Butanol, n-Hexanol, 2-Ethyl-1-hexanol, Ethylenglycol, Propylenglycol, Isomere des Butandiols, 2-Ethyl-1,3-hexandiol, Glycerin, Etheralkohole wie 1-Methoxy-2-propanol, 3-Ethyl-3-hydroxy-methyloxetan, Tetrahydrofurfurylalkohol, Ethylenglycolmonomethylether, Ethylenglycolmonobutylether, Dietyhlenglycol-monomethylether, Dietyhlenglycolmonoethylether, Dietyhlenglycolmono-butylether, Diethylenglycol, Dipropylenglycol, Polyethylenglycole, Polypropylenglycole, gemischte Polyethylen-/Polypropylenglycole sowie deren Monoalkylether, Esteralkohole wie Ethylenglycolmonoacetat, Propylenglycolmonolaurat, Glycerindiacetat, Glycerinmonobutyrat oder 2,2,4-Trimethyl-1,3-pentandiolmonoisobutyrat, ungesättigte Alkohole wie Allylalkohol, 1,1-Dimethylallylalkohol oder Oleylalkohol, araliphatische Alkohole wie Benzylalkohol oder monosubstituierte Amide wie N-Methylformamid, N-Methylacetamid, Cyanoacetamid oder 2-Pyorrolidinon oder Mischungen solcher Lösungsmittel.

Der Verdünnungsgrad der Katalysatorlösungen entspricht typischerweise einer Konzentration von 0,05 bis 20 Gew.-%, vorzugsweise 0,1 bis 10 Gew.-%, besonders bevorzugt 0,5 bis 5 Gew.-%.

Die Mengen der als Katalysator-Lösungsmittel eingesetzten Polyole werden nicht zu den Mengen an eingesetzten Komponenten A) bzw. A') gerechnet.

Die Umsetzung erfolgt vorzugsweise unter Inertgasatmosphäre bei einer Temperatur im Bereich von 0 °C bis 150 °C, bevorzugt im Bereich zwischen 40 °C und 130 °C und besonders bevorzugt zwischen 70 °C und 120 °C.

Bevorzugt wird die Allophanatisierung solange fortgeführt, bis alle Urethangruppen weitgehend zu Allophanatgruppen umgesetzt wurden. Der Umsetzungsgrad beträgt hier vorzugsweise mindestens 70% und besonders bevorzugt mindesten 80%.

Nachdem der gewünschte Umsetzungsgrad erreicht ist, kann die Umsetzung gestoppt werden, um im Anschluss Nebenreaktionen zu vermeiden . Dies kann beispielsweise durch Abkühlen der Reaktionsmischung erfolgen. Vorzugsweise erfolgt das Abstoppen durch Zugabe eines Katalysatorgifts und optional einer anschließenden Erwärmung der Reaktionsmischung auf eine Temperatur oberhalb von 80 °C.

Geeignete Katalysatorgifte (Stopper) sind dem Fachmann bekannt. Es handelt sich dabei beispielsweise um Salzsäure, Phosphorsäure, Phosphonsäure, Carbonsäurechloride wie Acetylchlorid, Benzoylchlorid oder Isophthaloyldichlorid, Sulfonsäuren oder Sulfonsäureester, wie beispielsweise Methansulfonsäureester, p-Toluolsulfonsäure, Trifluormethansulfonsläure, Perfluorbutansulfonsäure, Dodecylbenzolsulfonsäure, p-Toluolsulfonsäuremethylester, p-Toluolsulfonsäureetyhlester, Mono- oder Dialkylphosphate wie beispielsweise Tridecylphosphat, Dibutylphosphat, Dioctylphosphat, oder auch silylierte Säuren wie beispielsweise Methansulfonsäure-trimethylsilylester, Trifluormethansulfonsäure-trimethylsilylester, Tris(trimethylsilyl)phosphat oder Diethyl(trimethylsily)phosphat.

Die zum Abstoppen der Reaktion benötigte Menge des Katalysatorgifts hängt wesentlich von der eingesetzten Menge des Katalysators ab. Grundsätzlich ist eine äquivalente Menge des Stoppers erforderlich, aber da ein Teil des Katalysators anderweitig desaktiviert werden kann, kann auch eine geringere Menge an Stopper ausreichend sein.

Auch das Katalysatorgift kann als solches oder in Lösung zugegeben werden, wobei sich als Lösungsmittel beispielsweise die zuvor aufgelisteten Katalysator-Lösungsmittel eignen. Neben diesen Lösungsmitteln können auch die Ausgangsisocyanate als Lösungsmittel für die Katalysatorgifte verwendet werden.

Nachdem die Reaktion beendet wurde, erfolgt eine Abtrennung vom Ausgangsdiisocyanat aus dem Reaktionsprodukt. Diese erfolgt vorzugsweise destillativ, beispielsweise bei einem Druck unterhalb von 5 mbar, bevorzugt unterhalb von 1 mbar und besonders bevorzugt unterhalb von 0.5 mbar und beispielsweise bei einer Temperatur im Bereich von 100 bis 200 °C, vorzugsweise im Bereich von 120 bis 180 °C. Der Restgehalt an monomerem Diisocyanat nach der Destillation beträgt vorzugsweise $\leq 0{,}50$ Gew.-%, besonders bevorzugt $\leq 0{,}3$ Gew.-% und besonders bevorzugt $< 0{,}10$ Gew.-%.

Die nach vorstehend beschriebenen Verfahren erhältlichen modifizierten Polyisocyanate zeichnen sich durch einen Anteil an Allophanatgruppen von mindestens 50 mol % ($\geq 50$ mol % bis $\leq 100$ mol%), bezogen auf die Gesamtmenge an Allophanatgruppen und Isocyanuratgruppen im modifizierten Polyisocyanat, aus. Bevorzugt weisen sie einen Anteil an Allophanatgruppen $\geq 50$ mol % bis $\leq 99$ mol%, besonders bevorzugt $\geq 60$ mol % bis $\leq 98$ mol%, ganz besonders bevorzugt $\geq 70$ mol % bis $\leq 98$ mol%, jeweils bezogen auf die Gesamtmenge an Allophanatgruppen und Isocyanuratgruppen im modifizierten Polyisocyanat, auf.

Der Isocyanuratgruppen-Anteil beträgt entsprechend maximal 50 mol% ($\geq 0$ mol % bis $\leq 50$ mol%), bevorzugt $\geq 1$ mol % bis $\leq 50$ mol%, besonders bevorzugt $\geq 2$ mol % bis $\leq 40$ mol%, ganz besonders bevorzugt $\geq 2$ mol % bis $\leq 30$ mol%,

bezogen auf die Gesamtmenge an Allophanatgruppen und Isocyanuratgruppen im modifizierten Polyisocyanat.

Die Gehalte an Allophanatgruppen und Isocyanuratgruppen im modifizierten Polyisocyanat werden durch NMR spektroskopische Analyse bestimmt.

Neben der Modifizierung mit Allophanatgruppen und gegebenenfalls Isocyanuratgruppen können die Polyisocyanate in untergeordneten Mengen zudem auch Urethan-, Harnstoff-, Uretdion- und/oder Iminooxadiazindiongruppen aufweisen. In untergeordneten Mengen bedeutet, dass ihr Anteil in Summe maximal 15 mol % ($\geq$ 0 bis $\leq$ 15 mol %), bevorzugt maximal 10 mol % ($\geq$ 0 bis $\leq$ 10 mol %), jeweils bezogen auf die Gesamtmenge an Allophanat-Gruppen und Isocyanuratgruppen im modifizierten Polyisocyanat, beträgt. Ihre Gehalte werden ebenfalls mittels NMR spektroskopischer Analyse bestimmt.

Die Gehalte (mol %) an Allophanatgruppen und Isocyanuratgruppen, sowie der Urethan-, Uretdion- und/oder Iminooxadiazindiongruppen werden vorzugsweise aus den Integralen protonenentkoppelter $^{13}$C-NMR-Spektren errechnet. Es wurde dazu ein Bruker AV III HD 600 NMR Spektrometer mit Probenkopf Z150361_001 (CP BBO 600SS3 BB-H&F-05 ZE T) verwendet. Bei einer Repititionszeit (D1) von 4s und einer Messzeit (AQ) von 1,57s wird erfahrungsgemäß davon ausgegangen, dass sehr ähnliche Carbonyl-Kohlenstoffatome über Integration vergleichbar sind. Im Falle von in CDCls gelösten auf Hexamethylendiisocyanat basierenden Polyisocyanaten weisen die einzelnen Strukturelemente folgende chemische Verschiebungen (in ppm) auf: Allophanat: 155.7 und 153.8 (je ein C-Atom); Isocyanurat: 148.4 (drei C-Atome); Iminooxadiazindion: 147.8, 144.3 und 135.3 (je ein C-Atom); Uretdion: 157.1 (zwei C-Atome); Urethan: 156,3 (ein C-Atom); Harnstoff 158-161 (ein C-Atom).

Vorzugsweise weisen die erfindungsgemäß mit Allophanatgruppen und gegebenenfalls Isocyanuratgruppen modifizierten Polyisocyanate eine mittlere Isocyanatfunktionalität $\geq$ 4 und/oder ein gewichtsmittleres Molekulargewicht von $\geq$ 1000 g/mol, besonders bevorzugt eine mittlere Isocyanatfunktionalität $\geq$ 5 und/oder ein gewichtsmittleres Molekulargewicht von $\geq$ 1500 g/mol bestimmt nach EN ISO 13885-1:2021-11, auf.

Vorliegend wird die mittlere Isocyanatfunktionalität des enthaltenen Polyisocyanats nach folgender Formel bestimmt:

$$F(GPC) = \frac{\dfrac{Mn(GPC)}{100 \times 42}}{\%NCO(Titr.)}$$

Worin der Isocyanatgruppengehalt als Gew.-% angegeben ist und titrimetrisch nach DIN EN ISO 11909:2007-05 bestimmt wird und das zahlenmittlere Molekulargewicht durch GPC nach DIN EN ISO 13885-1:2021-11 unter Verwendung von Polystyrol als Standard und Tetrahydrofuran als Eluent bestimmt wird.

Vorzugsweise weisen die erfindungsgemäß mit Allophanatgruppen und gegebenenfalls Isocyanuratgruppen modifizierten Polyisocyanate eine Viskosität von maximal 50.000 mPas bei 23°C, bevorzugt maximal 25.000 mPas bei 23°C, besonders bevorzugt maximal 10.000 mPas bei 23°C auf, wobei die Viskosität bestimmt wird gemäß DIN EN ISO 3219:1994-10 bei einer Scherrate von 250 s-1.

Gegenstände der vorliegenden Erfindung ist auch die Verwendung der erfindungsgemäßen mit Allophanatgruppen und gegebenenfalls Isocyanuratgruppen modifizierten Polyisocyanate zur Herstellung von Beschichtungsmitteln, Dichtstoffen und Klebstoffen, so wie die so erhältlichen Beschichtungsmittel, Dichtstoffe und Klebstoffe selbst. Bei diesen kann es sich um 1- oder 2-Komponenten-Systeme handeln.

Zur Herstellung von 1-Komponenten-Systemen können die Isocyanatgruppen der erfindungsgemäß modifizierten Polyisocyanate blockiert werden. In einer Ausführungsform liegen daher die Isocyanatgruppen der erfindungsgemäß modifizierten Polyisocyanate zumindest anteilig in mit wenigstens einem Blockierungsmittel G) blockierter Form vor. Dies bedeutet, dass zumindest (>_) 70 mol%, bevorzugt mindestens (>_) 85 mol%, besonders bevorzugt mindestens (>_) 95 mol% der Isocyanatgruppen in mit Blockierungsmitteln blockierter Form vorliegen.

Unter einem Blockierungsmittel werden Verbindungen verstanden, die mit einer Isocyanatgruppe reagieren und unter definierten Bedingungen wieder von dieser abgespalten werden können. Zur Blockierung können alle in der Polyurethanchemie üblichen Blockierungsmittel verwendet werden. Lediglich beispielhaft seien genannt Alkohole, Lactame, Oxime, Malonsäureester, Alkylacetoacetate, Triazole, Imidazole, Pyrazole und Amine wie Butanonoxim, Diisopropylamin, 1,2,4-Triazol, Dimethyl-1,2,4-triazol, Imidazol, Diethylmalonat, Acetessigsäure Ester, Acetonoxim, 3,5-Dimethylpyrazol, $\varepsilon$-Caprolactam, N-Methyl, N-Ethyl, N-(iso)propyl, N-n-Butyl, N-iso-Butyl, N-tert-Butylbenzylamin oder 1,1-Dimethylbenzylamin, N-Alkyl-N-1,1-Dimethylmethylphenylamin, Addukte von Benzylamin an Verbindungen mit aktivierten Doppelbindungen wie Malonester, N,N-Dimethylaminopropylbenzylamin und andere tertiäre Aminogruppen enthaltende gegebenenfalls substituierte Benzylamine und/oder Dibenzylamin. Weitere Beispiele sich eignender Blockierungsmittel sind CH-acide cyclische Ketone mit einer elektronenziehenden Gruppe in ortho-Stellung zur Ketogruppe, wie etwa einer Estergruppe, einer Sulfoxidgruppe, einer Sulfongruppe, einer Nitrogruppe, einer Phosphonatgruppe, einer Nitrilgruppe, einer Isonitrilgruppe oder einer Carbonylgruppe, sowie Kohlenwasserstoffharze mit phenolischen OH-Gruppen und gegebenenfalls substituierte Phenole, wie beispielsweise Cashewnussschalenprodukte, die mindestens Cardanol und/oder Cardol enthalten, wie sie z. B. in WO 2021/204741 A1 beschrieben sind.

Bevorzugt ist aber die Verwendung in 2-Komponenten Anwendungen ohne Blockierungsmittel.

Die Beschichtungsmittel, Dichtstoffe und Klebstoffe können Verbindungen mit isocyanatreaktiven Gruppen enthalten. Die isocyanatreaktiven Verbindungen weise bevorzugt eine Funktionalität an isocyanatreaktiven Gruppen von $\geq 2$ bis $\leq 6$ auf und sind bevorzugt ausgewählt aus der Gruppe bestehend aus -OH, -SH, -NH, - $NH_2$ und -(H)N-$N_2$H.

Bevorzugt sind hydroxyfunktionelle Verbindungen, beispielsweise die bereits vorangehend beschriebenen hydroxyfunktionellen Verbindungen.

In einer bevorzugten Ausführungsform werden Polyacrylatpoyole, Polyetherpolyole, Polyesterpolyole und/oder Polyesterurethanpolyole eingesetzt.

Die erfindungsgemäßen Beschichtungsmittel, Dichtstoffe und Klebstoffe können auch Katalysatoren zur Steuerung der Aushärtegeschwindigkeit enthalten, beispielsweise die in der Isocyanatchemie üblichen Katalysatoren, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Wismut(III)-2-ethylhexanoat, Wismut(III)-octoat oder Molybdänglykolat.

Die erfindungsgemäßen Beschichtungsmittel, Dichtstoffe und Klebstoffe können auch noch folgende Bestandteile enthalten: Additive zur Formulierung von Beschichtungsmitteln wie Verlaufsmittel, Benetzungsmittel, Haftvermittler, Verdicker, Antioxidationsmittel, Farbpigmente, Pigmente, Koaleszensmittel, Entschäumer, Entlüfter, etc.

Ein weiterer Gegenstand der Erfindung sind Substrate, umfassend die Beschichtungsmittel, Dichtstoffe oder Klebstoffe in ungehärteter, teilweise gehärteter oder vollständig gehärteter Form.

Als Substrate kommen je nach Anwendung beispielsweise Glas, Metall, Gewebe, Leder, Fasern, Papier, Holz, Kunststoff, Stein und Beton in Betracht.

Ein weiterer Gegenstand der Erfindung ein Verfahren zur Beschichtung eines Substrats umfassend die Schritte

i) Bereitstellen eines gegebenenfalls vorbehandelten Substrats,
ii) Auftragen eines Beschichtungsmittels erhältlich gemäß der oben stehenden Verwendung und
iii) teilweises oder vollständiges Härten des Beschichtungsmittels.

Beispiele:

Alle Prozentangaben beziehen sich, soweit nicht anderslautend vermerkt, auf das Gewicht.

Die Bestimmung der NCO-Gehalte erfolgte titrimetrisch nach DIN EN ISO 11909:2007-05.

Die Rest-Monomeren Gehalte wurden nach DIN EN ISO 10283:2007-11 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Auslaufzeiten wurden nach DIN EN ISO 2431:2012-03 mit Hilfe eines Auslaufbechers mit 5 mm Düse bestimmt.

Die Trocknungseigenschaften der Beschichtungssysteme wurden nach DIN 53 150:2002-09 bestimmt.

Der Glanz der erhaltenen Beschichtungen wurde reflektometrisch nach DIN EN ISO 2813:1999-06 im 20°-Winkel gemessen.

Die Bestimmung der Pendeldämpfung nach König erfolgte nach DIN EN ISO 1522:2007-04 auf Glasplatten.

13C-NMR-Spektren wurden mit einem Bruker AV III HD 600 NMR Spektrometer mit Probenkopf Z150361_001 (CP BBO 600SS3 BB-H&F-05 ZE T) aufgenommen. Es wurden 512 Scans durchgeführt, bei einer Repititionszeit (D1) von 4s und einer Messzeit (AQ) von 1,57s.

Molekulargewichte wurden mittels Gelpermeationschromatographie gemäß DIN EN ISO 13885-1:2021-11 gemessen. Verwendet wurden vier Säulen (2x PSS SDV 50A, 5µ, 2x PSS SDV 100A, 5µ).

Zur Prüfung der Beschichtungen auf Lösungsmittelbeständigkeit wurden jeweils kleine Mengen der Lösungsmittel Xylol, 1-Methoxypropyl-2-acetat, Ethylacetat und Aceton in Reagenzgläser gegeben und mit einem Wattebausch an der Öffnung versehen, so dass eine mit Lösungsmittel gesättigte Atmosphäre innerhalb der Reagenzgläser entstand. Die Reagenzgläser wurden anschließend mit dem Wattebausch auf die Oberfläche der auf Glas applizierten Lacke gebracht und verblieben dort für 5 Minuten. Nach Abwischen des Lösungsmittels wurde der Film auf Zerstörung/Erweichung/Haftverlust geprüft und bewertet (0 = keine Veränderung, 5 = Film völlig aufgelöst). Angegeben sind die Bewertungen für die vier Lösungsmittel jeweils in folgender Reihenfolge: Xylol, 1-Methoxypropyl-2-acetat, Ethylacetat, und Aceton in Form vier aufeinanderfolgender Ziffern.

**Polyisocyanat 1** (erfindungsgemäß)

In einen 1001-Reaktor wurden 49,56kg Hexamethylendiisocynanat (Desmodur® H, Covestro Deutschland AG) vorgelegt, dreimal mit Stickstoff inertisiert und auf 100°C aufgeheizt. Eine Mischung aus 554,6g Trimethylolpropan und 690,3g 1,3-Butandiol wurde langsam, über eine Stunde, zugetropft. Die Mischung löste sich dabei sofort im Polyisocyanat. Es wurde bei 100°C etwa 1,5 Stunden lang weiter gerührt, bis ein NCO von 46,5% erreicht war. Anschließend wurde der Katalysator (2,54g Zinkoctoat, gelöst in 48,26g 2-Ethyhexanol) in vier gleichen Portionen nacheinander (ca. je fünf Minuten) zugegeben. Es wurde bei 100°C etwa 1 Stunde lang weiter gerührt, bis ein NCO von 44,2% erreicht war. Die Reaktion wurde dann durch Zugabe der Stopperlösung (5,08g ortho-Phosphorsäure in 45,72g 2-Ethylhexandiol) beendet.

Nach Filtration wurde das überschüssige HDI am Dünnschichtverdampfer bei 130°C abgetrennt. Dem Harz (ca. 11kg) wurden 0,22g Isophtaloylchlorid in 4,14g Isopropanol zur Stabilisierung beigemengt. Es hatte folgende Kenndaten:

| | |
|---|---|
| NCO-Gehalt: | 19,8 % |
| monomeres HDI: | 0,07 % |
| Viskosität (23°C): | 5200 mPas |

**Polyisocyanat 2** (nicht erfindungsgemäß, Polyisocyanurat-Polyisocyanat)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt. Das erhaltene Polyisocyanat hatte zunächst eine Viskosität von 3000mPas (23°C) und wurde dann mit Butylacetat auf 90 Gew.-% Polyisocyanat-Anteil verdünnt. Es wies die folgenden Kenndaten auf.

| | |
|---|---|
| NCO-Gehalt: | 19,6 % |
| monomeres HDI: | 0,08 % |
| Viskosität (23°C): | 500 mPas |

**Polyisocyanat 3** (nicht erfindungsgemäß, Polyisocyanurat/Allophanatpolyisocyanat)

100 Teile Hexamethylendiisocyanat (HDI) wurden vorgelegt und auf 105 °C temperiert. Bei dieser Temperatur wurden unter Rühren 10 Teile Trimethylolpropan zugegeben. Dabei kam es zu einer Trübung, die sich erst nach einiger Zeit wieder auflöste. Nach Beendigung der Urethanisierungsreaktion wurde die Reaktionstemperatur wurde auf 95 °C abgesenkt. Anschließend wurde durch Zugabe einer 0,5%-igen Trimethylbenzylammoniumhydroxid-Lösung in 2-Ethylhexanol die Trimerisierungs- und Allophanatisierungsreaktion gestartet. Beim Erreichen eines NCO-Werts von 36 % wurde die Reaktion beendet, indem eine Stopperlösung (10% Dibutylphosphat in HDI) in einem Gewichtsverhältnis von 100 Teilen Katalysatorlösung zu 3 Teilen Stopperlösung zugegeben wurden. Es wurde noch weitere 30 Minuten bei 95 °C gerührt und anschließend das verbliebene monomere HDI in einem Kurzwegverdampfer bei 140 °C und 0,1 mbar abgetrennt. Das erhaltene Polyisocyanat hatte zunächst eine Viskosität von 35000mPas (23°C) und wurde mit Butylacetat auf 80 Gew.-% Polyisocyanat-Anteil verdünnt. Es wies dann die folgenden Kenndaten auf.

| | |
|---|---|
| NCO-Gehalt: | 15,4 % |
| monomeres HDI: | 0,07 % |
| Viskosität (23°C): | 500 mPas |

**Anwendungsbeispiel**

Variierende Gew.-Teile eines handelsüblichen Polyesterpolyols (SFTALUX® D A 665; Fa. Allnex GmbH, Wiesbaden, DE) mit einem Festkörpergehalt von 65 Gew.-% (in Butylacetat/Xylol) und eines weiteren Polyesterpolyols (SETALUX® 91767 VX-60; Fa. Allnex GmbH, Wiesbaden, DE) mit einem Festkörpergehalt von 60 Gew.-% (in Solvent Naphtal Xylol) wurden mit 4 Gew.-Teilen einer 40 %igen Lösung eines handelsüblichen HALS-Lichtstabilisators (Hostavin® 3070P, Clariant International Ltd, Muttenz, CH) in Methoxypropylacetat, 16 Gew.-Teilen einer 50 %igen Lösung eines handelsüblichen UV-Absorbers (Hostavin® 3400 liq, Clariant International Ltd, Muttenz, CH) im Methoxypropylacetat, 4 Gew.-Teilen einer 10%igen Lösung eines handelsüblichen Verlaufsmittels (Byk 331, Byk-Chemie GmbH), versetzt und durch intensives Rühren homogen vermischt. Die jeweiligen Mischungen wurden mit variierenden Mengen Methoxypropylacetat/ Solvent Naphta 100 (1:1) auf eine Auslaufzeit von 30 Sekunden (ISO-5-Becher) eingestellt.

Anschließend wurden variierende Gew.-Teile der Polyisocyanate 1, 2, 3 als Vernetzerkomponente von Hand mit einem Rührstab eingerührt.

Die Beschichtungszusammensetzungen 1 bis 3 wurden mit Hilfe eines Filmziehrahmens jeweils in einer Naßfilm-Schichtdicke von ca. 150 $\mu$m auf Glasplatten aufgebracht und innerhalb von 30 Minuten bei 140°C ausgehärtet sowie 16 Stunden bei 60°C gealtert.

Nachstehend zeigt Tabelle 1 die Zusammensetzungen der Beschichtungszusammensetzungen 1 bis 3 in Gew.-Teilen, Tabelle 2 die Ergebnisse der anwendungstechnischen Prüfungen der erhaltenen Beschichtungen im Vergleich.

**Tabelle 1:** Vergleichsbeispiele 2 und 3 sowie erfindungsgemäßes Beispiel 1 - Zusammensetzung der Beschichtungsmittel

| Beispiel | 1 (erfindungsgemäß) | 2 (Vergleich) | 3 (Vergleich) |
|---|---|---|---|
| SETALUX® D A 665 (65%ig in BA/X) | 299,34 | 309,81 | 295,45 |
| SETALUX® 91767 VX-60 (60%ig in SN/X) | 81,06 | 83,90 | 80,01 |
| BYK®-331 (10%ig in MPA) | 4,00 | 4,00 | 4,00 |
| Hostavin® 3070 P (40%ig in MPA) | 10,00 | 10,00 | 10,00 |
| Hostavin® 3400 liq (50%ig in MPA) | 16,00 | 16,00 | 16,00 |
| BA : SN 100 (1:1) | 234,67 | 231,32 | 265,39 |
| Polyisocyanat 1 (100%ig) | 156,80 | -- | -- |
| Polyisocyanat 2 (90%ig in BA) | -- | 164,76 | -- |
| Polyisocyanat 3 (80%ig in BA) | -- | -- | 199,94 |
| MPA / SN 100 (1:1) | 39,20 | -- | -- |
| Festkörper (Gew.-%) | 51,6 | 50,4 | 47,5 |
| Auslaufzeit DIN 5 mm [s] | 30 | 30 | 30 |

**Tabelle 2:** Vergleichsbeispiele 2 und 3 sowie erfindungsgemäßes Beispiel 1 - Lacktechnische Eigenschaften

| Beispiel | | 1 (erfindungsgemäß) | 2 (Vergleich) | 3 (Vergleich) |
|---|---|---|---|---|
| Schichtdicke [$\mu$m] | | ca. 40 | ca. 40 | ca. 40 |
| Glanz 20° | | 89 | 90 | 90 |
| Pendelhärte [s] | | 188 | 197 | 195 |
| Lösemittelbeständigkeit (X, MPA, EA, A) | 5 min | 0 / 0 / 2-3 / 4 | 1/1/3/4 | 0/0/3/2 |

Wie in Tabelle 2 zu erkennen ist, erreicht das erfindungsgemäße Allophanat-basierte Isocyanatsystem (Beispiel 1) bessere Lösemittelbeständigkeiten als das nicht erfindungsgemäße Isocyanurat-basierende System (Vergleichsbeispiel 2). Es erreicht nicht ganz die Beständigkeiten des Allophanat-basierten Systems, das ausschließlich auf TMP als Polyolkomponente aufgebaut ist (Vergleichsbeispiel 3). Im Vergleich zu diesem weist es aber eine deutlich verringerte Viskosität auf (5.700mPas zu 35.000mPas, 100%-Systeme), was sich in der Formulierung durch einen höheren Festkörperanteil bemerkbar macht. Weiterhin ist der erfindungsgemäße Isocyanat-Vernetzer einfacher herzustellen, weil die Polyolmischung bei Raumtemperatur als Flüssigkeit beigemengt werden kann und mit dem vorgelegten Isocyanat mischbar ist.

**Patentansprüche**

1. Mit Allophanatgruppen und gegebenenfalls Isocyanuratgruppen modifiziertes Polyisocyanat

mit einem Anteil an Allophanatgruppen ≥ 50 mol%, bevorzugt ≥ 50 mol % bis ≤ 99 mol%, bevorzugt ≥ 60 mol % bis ≤ 98 mol%, besonders bevorzugt ≥ 70 mol % bis ≤ 98 mol%, jeweils bezogen auf die Gesamtmenge an Allophanatgruppen und Isocyanuratgruppen im modifizierten Polyisocyanat und bestimmt durch NMR spektroskopische Analyse,
welches erhältlich ist aus der Reaktion einer Zusammensetzung enthaltend oder bestehend aus

A) einer Mischung aus A1) 1,1,1-Trimethylolpropan und A2) 1,3- Butandiol und/oder 1,4-Butandiol, und
B) mindestens einem monomeren Diisocyanat, welches aliphatisch und/oder cycloaliphatisch, gebundene Isocyanatgruppen aufweist.

2. Verfahren zur Herstellung eines mit Allophanatgruppen und gegebenenfalls Isocyanuratgruppen modifizierten Polyisocyanats

mit einem Anteil an Allophanatgruppen ≥ 50 mol%, bevorzugt ≥ 50 mol % bis ≤ 99 mol%, bevorzugt ≥ 60 mol % bis ≤ 98 mol%, besonders bevorzugt ≥ 70 mol % bis ≤ 98 mol%, jeweils bezogen auf die Gesamtmenge an Allophanatgruppen und Isocyanuratgruppen im modifizierten Polyisocyanat und bestimmt durch NMR spektroskopische Analyse,
wobei eine Zusammensetzung enthaltend oder bestehend aus

A) einer Mischung aus A1) 1,1,1-Trimethylolpropan und A2) 1,3- Butandiol und/oder 1,4-Butandiol, und
B) mindestens einem monomeren Diisocyanat, welches aliphatisch und/oder cycloaliphatisch, gebundene Isocyanatgruppen aufweist.

zur Reaktion gebracht wird.

3. Mit Allophanatgruppen und gegebenenfalls Isocyanuratgruppen modifiziertes Polyisocyanat gemäß Anspruch 1 oder Verfahren gemäß Anspruch 2, wobei die Bildung der Allophanatgruppen und gegebenenfalls Isocyanuratgruppen in Gegenwart mindestens eines die Bildung der Allophanatgruppen und gegebenenfalls der Isocyanuratgruppen beschleunigenden Katalysators, erfolgt.

4. Mit Allophanatgruppen und gegebenenfalls Isocyanuratgruppen modifiziertes Polyisocyanat gemäß Anspruch 1 oder 3 oder Verfahren gemäß einem der Ansprüche 2 bis 3, wobei das modifizierte Polyisocyanat eine zahlenmittlere Isocyanatfunktionalität von ≥ 4 und/oder ein gewichtsmittleres Molekulargewicht von ≥ 1000g/mol, bestimmt nach DIN EN Iso 13885-1:2021-11, aufweist.

5. Mit Allophanatgruppen und gegebenenfalls Isocyanuratgruppen modifiziertes Polyisocyanat gemäß Anspruch 1 oder 3 bis 4 oder Verfahren gemäß einem der Ansprüche 2 bis 4, wobei das modifizierte Polyisocyanat eine Viskosität von maximal 50.000 mPas bei 23°C, bevorzugt maximal 25.000 mPas bei 23°C, besonders bevorzugt maximal 10.000 mPas bei 23°C aufweist, bestimmt gemäß DIN EN ISO 3219: 1994-10 bei einer Scherrate von 250 s-1 .

6. Verwendung eines modifizierten Polyisocyanats gemäß Anspruch 5 zur Herstellung von Beschichtungsmitteln, Dichtstoffen oder Klebstoffen.

7. Beschichtungsmittel, Dichtstoffe oder Klebstoffe, erhältlich aus der Verwendung gemäß Anspruch 6.

8. Verwendung gemäß Anspruch 6 oder Beschichtungsmittel, Dichtstoffe oder Klebstoffe gemäß Anspruch 7, wobei es sich um 1- oder 2-Komponenten-Systeme handelt.

9. Substrate umfassend Beschichtungsmittel, Dichtstoffe oder Klebstoffe gemäß Anspruch 7 oder 8 in ungehärteter, teilweise gehärteter oder vollständig gehärteter Form.

10. Verfahren zur Beschichtung eines Substrats umfassend die Schritte

i) Bereitstellen eines gegebenenfalls vorbehandelten Substrats,
ii) Auftragen eines Beschichtungsmittels gemäß Anspruch 7 oder 8, und
iii) teilweises oder vollständiges Härten des Beschichtungsmittels.

Europäisches
Patentamt

European
Patent Office

Office européen
des brevets

**EUROPÄISCHER RECHERCHENBERICHT**

**Nummer der Anmeldung**

EP 24 22 0056

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 303 246 A1 (COVESTRO DEUTSCHLAND AG [DE]) 10. Januar 2024 (2024-01-10) * Absatz [0067]; Verbindung Polyisocyanate 4 * ----- | 1-10 | INV. C08G18/22 C08G18/32 C08G18/67 C08G18/73 C08G18/78 |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 6. Mai 2025 | Bergmeier, Martin |

EPO FORM 1503 03.82 (P04C03)

# EP 4 759 853 A1

## ANHANG ZUM EUROPÄISCHEN RECHERCHENBERICHT
## ÜBER DIE EUROPÄISCHE PATENTANMELDUNG NR.

EP 24 22 0056

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2025

| Im Recherchenbericht angeführtes Patentdokument | Datum der Veröffentlichung | Mitglied(er) der Patentfamilie | Datum der Veröffentlichung |
|---|---|---|---|
| EP 4303246 A1 | 10-01-2024 | CN 119301175 A | 10-01-2025 |
| | | EP 4303246 A1 | 10-01-2024 |
| | | EP 4551634 A1 | 14-05-2025 |
| | | WO 2024008544 A1 | 11-01-2024 |

Für nähere Einzelheiten zu diesem Anhang : siehe Amtsblatt des Europäischen Patentamts, Nr.12/82

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019062383 A1
- EP 4303246 A1
- DE 1770245 A
- WO 03002630 A
- GB 2221465 A
- GB 2222161 A
- DE 3240613 A
- DE 3219608 A
- EP 0100129 A
- GB 1391066 A
- GB 1386399 A
- GB 809809 A
- EP 0056158 A
- EP 0056159 A
- EP 0033581 A
- EP 2883895 A
- DE 1667309 A
- EP 0013880 A
- EP 0047452 A
- EP 3765 A

- EP 10589 A
- DE 2631733 A
- EP 0671426 A
- EP 1599526 A
- US 4789705 A
- EP 1229016 A
- WO 2005087828 A
- EP 0339396 A
- EP 0379914 A
- EP 0443167 A
- EP 0798299 A
- EP 0896009 A
- EP 0962455 A
- EP 0668271 A
- WO 1999023128 A
- EP 0102482 A
- WO 2013167404 A
- WO 2021204741 A1
- EP 330966 A

**In der Beschreibung aufgeführte Nicht-Patentliteratur**

- **LAAS et al.** *J. Prakt. Chem.*, 1994, vol. 336, 185-200
- **H. MEERWEIN et al.** *Angew. Chem.*, 1960, vol. 72, 927-934

- *Justus Liebigs Annalen der Chemie*, 1949, vol. 562, 75-136
- *European Polymer Journal*, 1979, vol. 16, 147-148